# FASCICULE DE BREVET EUROPEEN

(11) **EP 0 686 468 B1**
(45) Date de publication et mention de la délivrance du brevet: **05.08.1998**
(21) Numéro de dépôt: 95401282.9
(22) Date de dépôt: 01.06.1995
(51) Int. Cl.: B29C 33/50, A45D 40/16

(54) **Procédé et dispositif pour le moulage d'objets en un matériau à bas point de fusion**
Vorrichtung und Verfahren zum Formen von Gegenständen aus Material mit niedrigem Schmelzpunkt
Method and apparatus for the moulding of objects using a material having a low melting point

(30) Priorité: 07.06.1994 FR 9406955
(43) Date de publication de la demande: 13.12.1995
(73) Titulaire: BUREAU D'ETUDES LAGROST, Société Anonyme dite :, F-77212 Avon Cédex (FR)
(72) Inventeur: Legoc, André, F-77116 Acheres la Forêt (FR)
(74) Mandataire: Jolly, Jean-Pierre

(56) Documents cités:
- EP-A- 0 578 179
- FR-A- 2 443 324
- FR-A- 2 468 455
- US-A- 3 982 721
- PATENT ABSTRACTS OF JAPAN vol. 11 no. 172 (M-595) ,3 Juin 1987 & JP-A-62 003909 (MATSUSHITA ELECTRICAL IND CO) 9 Janvier 1987,

## Description

La présente invention concerne un procédé et un dispositif pour le moulage d'objet en un matériau à bas point du fusion, tel que de la cire, de la paraffine, du rouge à lèvre etc..., et plus généralement, une matière fusible dont le point de fusion n'excède pas environ 120°c.

Ces objets sont en général réalisés par coulage du matériau fondu dans des moules rigides, présentant un plan de joint pour le démoulage. Le démoulage s'effectue soit par glissement, si la forme de l'objet le permet, soit par ouverture du moule, et il existe habituellement l'utilisation de produits de démoulage, déposés sur la surface interne du moule, qui risquent d'altérer la surface des objets moulés.

En outre, un tel processus de moulage ne se prête pas à la réalisation d'objets comportant des parties en creux ou en relief.

On connaît, par ailleurs, par FR-A-2 443 324, un procédé de moulage d'objets en un matériau à bas point de fusion selon lequel :
- on introduit par l'orifice de remplissage d'un moule souple chauffé une quantité prédéterminée du matériau à bas point de fusion à l'état fondu ;
- après refroidissement du produit, on ouvre au moins partiellement le moule souple en exerçant une dépression sur au moins la partie de sa surface externe contiguë à l'orifice de remplissage ;
- on retire l'objet moulé du moule à l'aide d'un organe support à travers l'ouverture de remplissage.

La présente invention vise à proposer un procédé de moulage et de démoulage d'objets en un matériau à bas point de fusion de ce type, qui élimine les traces du plan de joint sur l'objet moulé, qui se prête à la fabrication d'objets présentant à leur surface des parties en creux et/ou en relief et qui puisse être mis en oeuvre de façon simple et peu coûteuse.

A cet effet, l'invention a pour objet un procédé de moulage d'objets en un matériau à bas point de fusion, du type général décrit dans FR-A-2 443 324, caractérisé en ce que :
- préalablement à l'introduction du matériau fondu dans le moule souple, on procède au chauffage de ce moule par mise en contact de sa surface externe avec un élément chauffant, et
- on procède au refroidissement du moule souple par mise en contact de sa surface externe avec un élément réfrigérant.

Dans la pratique, notamment pour la réalisation de bâtons de rouge à lèvres, le moule souple en un matériau déformable élastiquement aura avantageusement la forme d'un doigt de gant de dimensions et de profit approprié, ouvert à l'une de ses extrémités.

Pour chauffer ce moule, avant d'y introduire le matériau à bas point de fusion à l'état fondu, il suffira de le loger dans un évidement de forme sensiblement complémentaire d'un godet ou d'une plaque métallique équipée de moyens de chauffage, par exemple de résistances électriques ou de canalisations à circulation d'un liquide caloporteur.

De façon analogue, pour refroidir le moule empli du matériau à bas point de fusion, on pourra le loger dans un évidement de forme sensiblement complémentaire d'un godet ou d'une plaque métallique équipée de moyens de refroidissement, par exemple de canalisations à circulation d'un fluide de refroidissement.

La dépression exercée sur la surface externe du moule au voisinage de l'orifice de remplissage de celui-ci, pour procéder à l'ouverture du moule, pourra être exercée par au moins un conduit ménagé dans la plaque de refroidissement.

De préférence, l'ouverture du moule s'effectuera en deux temps : dans un premier temps, on exercera une dépression sur sa paroi externe au voisinage de l'orifice de ce moule, de façon à permettre un accès suffisant à l'objet moulé ; puis, dans un second temps, on exercera de façon analogue une dépression sur la partie du moule la plus éloignée de l'orifice de remplissage de manière à libérer l'objet moulé.

L'organe-support destiné à extraire l'objet moulé de son moule pourra être mis en place après la première phase d'ouverture du moule. Cet organe-support pourra comporter une simple partie tubulaire qui viendra coiffer l'extrémité correspondante de l'objet moulé voisine de l'orifice de remplissage.

En variante, l'organe-support pourra être mis en position dans le moule dès le début du procédé, l'opération de remplissage s'effectuant alors à travers cet organe-support, qui reste alors en position pendant toute la durée de mise en oeuvre du procédé.

Naturellement, dans la pratique, on fabriquera simultanément une pluralité d'objets moulés, en utilisant une pluralité de moules souples, portés par une même platine, qui les transfère conjointement au poste de chauffage, puis au poste de refroidissement et de démoulage. Les moules portés par la platine pourront être abaissés vers les évidements de forme complémentaire des organes de chauffage ou de refroidissement destinés à les recevoir ou, inversement, les organes de chauffage ou de refroidissement comportant ces évidements pourront être soulevés pour que les moules souples prennent place d'eux-mêmes dans les évidements associés.

Le dispositif utilisé pour la mise en oeuvre du procédé conforme à l'invention constitue naturellement un autre objet de celle-ci.

Deux formes de mise en oeuvre de l'invention vont être décrites ci-après, plus en détail, en référence aux dessins schématiques annexés. Sur ces dessins :

Les figures 1 à 9 illustrent les phases successives d'une première forme de mise en oeuvre de l'invention :

Les figures 10 à 14 illustrent une autre forme de mise en oeuvre de l'invention.

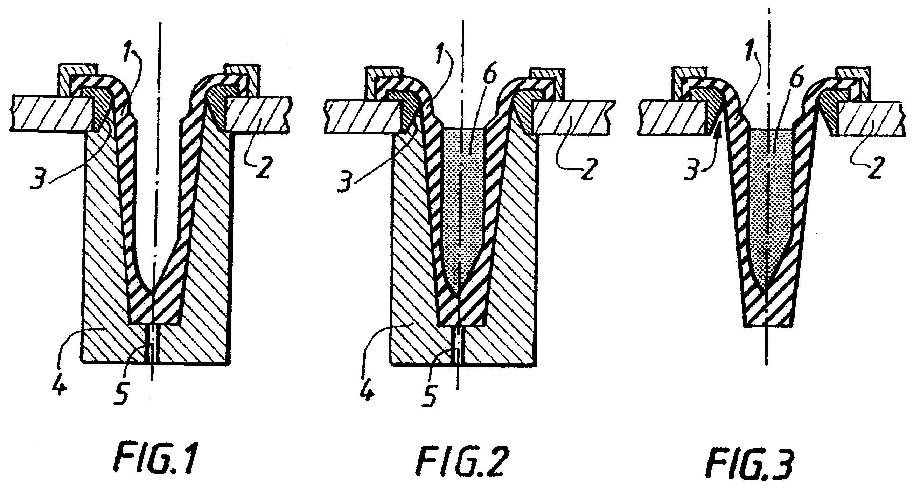

La figure 1 est une coupe axiale illustrant la phase de chauffage d'un moule souple 1, en un matériau élastiquement déformable, destiné à recevoir une masse prédéterminée d'un matériau à bas point de fusion à l'état fondu (dans le cas présent, du rouge à lèvres), destiné à être moulé dans le moule 1, ici en forme de doigt de gant. Le moule 1 est supporté par une platine 2, avec ses bords latéraux pincés sur cette platine, dans une ouverture 3 de laquelle il est engagé, avec son extrémité fermée dirigée vers le bas.

Pour chauffer le moule 1, avant de procéder au coulage du rouge à lèvres fondu, on l'amène dans un godet 4 de forme complémentaire, en métal par exemple, équipé de moyens de chauffage, non représentés, tels que des résistances électriques. Dans le fond du godet 4 est prévu un orifice 5, connecté à une source d'aspiration, qui maintient ainsi fermement le godet en position. Le godet 4 pourrait naturellement être remplacé par un évidement d'un organe de chauffage.

Lorsque le moule a été amené à la température désirée (de l'ordre d'environ 100°C pour du rouge à lèvre) on y verse la quantité prédosée 6 de rouge à lèvres fondu (figure 2).

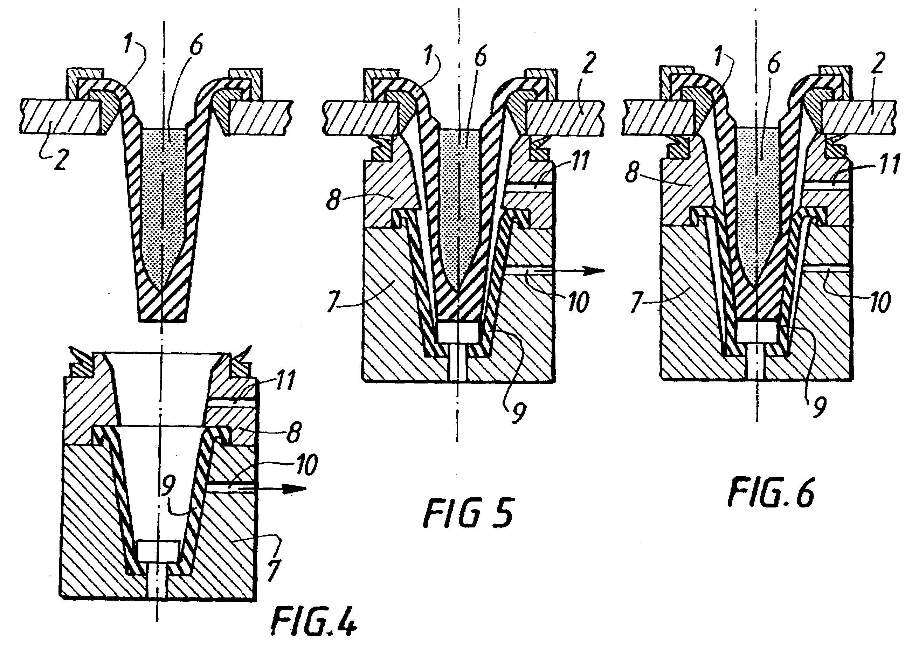

La platine 2 est ensuite transférée, avec le moule 1 empli de rouge à lèvres 6 qu'elle supporte (figure 3), jusqu'à un poste de refroidissement représenté plus en détail sur les figures 4 et 6.

Ce poste de refroidissement comprend un godet en deux parties 7 et 8, la partie 7 étant destinée à recevoir la partie inférieure du moule 1, tandis que la partie 2 reçoit la partie supérieure de ce moule. Dans la partie inférieure est logé un élément souple 9, de forme complémentaire de celle de la partie du moule 1 associé et dont les bords latéraux sont pincés entre les parties 7 et 8. Un conduit 10 ménagé dans la partie 7 et relié à un moyen d'aspiration débouche à l'extérieur de l'élément souple 1 et peut exercer une dépression à l'extérieur de celui-ci. De façon analogue, un conduit 11, ménagé dans la partie supérieure 8 et connecté à une source d'aspiration permet d'exercer une dépression à l'extérieur de la partie supérieure du moule 1.

Les godets constitués des parties 7 et 8 comprennent des moyens de refroidissement, par exemple des conduits dans lesquels circule un fluide de refroidissement.

Naturellement ces godets pourraient être remplacés par des évidements d'un ensemble de refroidissement aptes à recevoir simultanément une pluralité de moules 1.

Chaque moule 1 amené par la platine 2 à l'aplomb des godets 7, 8 (figure 4) est introduit dans ceux-ci (figure 5) avec les conduits 10 sous dépression, de manière à faciliter la mise en place des moules 1 dans les éléments souples 9. La dépression est ensuite supprimée et l'élément souple vient s'appliquer contre l'extrémité inférieure du moule 1 (figure 6).

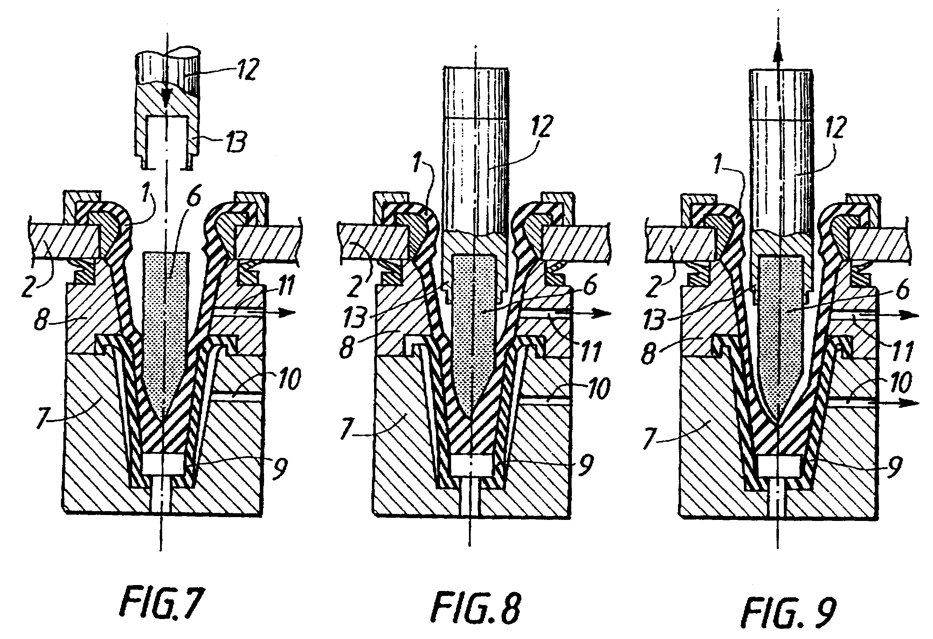

Après solidification du bâton de rouge à lèvres 6, on exerce une dépression par le conduit 11 sur la face externe du moule 1 (figure 7) de façon à ouvrir la partie supérieure de ce moule et à libérer l'accès au bâton 6 de rouge à lèvre, sur l'extrémité duquel un organe-support 12, comportant une extrémité tubulaire 13 de forme complémentaire, est alors abaissé pour le saisir (figure 8).

Une dépression est ensuite exercée sur la face externe de l'élément souple 9 à l'aide du conduit 10 (figure 9), de façon à décoller l'extrémité inférieure du moule 1 du bâton 6 de rouge à lèvres, lequel peut ainsi être extrait du moule par l'organe-support 12.

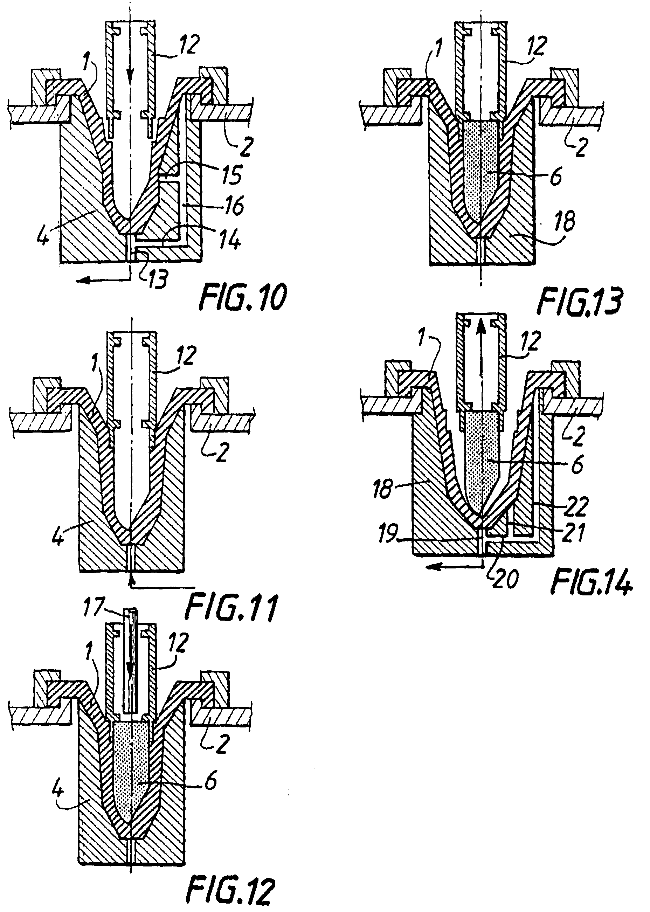

Les figures 10 à 14, sur lesquelles les organes déjà décrits sont désignés par les mêmes chiffres de référence, illustrent une autre forme de mise en oeuvre de l'invention, dans laquelle l'organe-support 12 est mis en place dans le moule 1 dès le début de la mise en oeuvre du procédé.

Dans ce but, le godet 4 de chauffage du moule 1 (figure 10) comporte des conduits 13, 14, 15, 16, permettant de mettre sous dépression la totalité de la face externe du moule 1 pour l'appliquer fermement contre l'évidement du godet dans lequel il est logé, et d'y engager dans sa position définitive l'organe-support 12, destiné à l'extraction ultérieure du bâton de rouge à lèvres 6.

La dépression est ensuite supprimée de façon à assujettir l'organe-support 12 au moule 1 (voir la figure 11, qui est une coupe axiale dans un plan perpendiculaire à celui de la figure 10).

Le rouge à lèvres fondu est alors introduit en une quantité prédosée par un tube 17, à travers l'organe support 12, dans le moule 1, pour former le bâton 6 de rouge à lèvres.

L'ensemble constitué par la platine 2, le moule 1 l'organe-support 12, et le rouge à lèvres est alors retiré du godet 4 et le moule 1 est transféré dans un godet de refroidissement 18 (figure 13).

La figure 14, qui est une coupe axiale dans un plan perpendiculaire à celui de la figure 13, montre que des conduits 19, 20, 21, 22, ménagés dans le godet 18 et connectés à une source d'aspiration, permettent d'exercer une dépression à l'extérieur du moule 1, pour dégager le bâton 6 de rouge à lèvres, qui reste solidaire de l'organe-support 12, à l'aide duquel on peut l'extraire du moule.

Dans les deux formes de mise en oeuvre décrites ci-dessus, les différentes phases du procédé de l'invention sont très faciles à mettre en oeuvre et ne nécessitent qu'un appareillage simple et peu coûteux, sur lequel elles peuvent éventuellement être automatisées.

On notera que le bâton de rouge à lèvres ainsi réalisé ne comporte aucune trace de plan de joint et qu'il peut comporter, à sa surface, des motifs décoratifs, des inscriptions et/ou la marque du fabricant.

## Revendications

1. Procédé de moulage d'objets en un matériau à bas point de fusion, comprenant les phases successives suivantes :
- on introduit par l'orifice de remplissage d'un moule souple (1) chauffé une quantité prédéterminée du matériau à bas point de fusion à l'état fondu ;
- après refroidissement du produit, on ouvre au moins partiellement le moule souple (1) en exerçant une dépression sur au moins la partie de sa surface externe contigue à l'orifice de remplissage ;
- on retire l'objet moulé (6) du moule (1) à l'aide d'un organe support (12) à travers l'ouverture de remplissage ;
ce procédé étant caractérisé en ce que :
- préalablement à l'introduction du matériau fondu dans le moule souple (1), on procède au chauffage de ce moule par mise en contact de sa surface externe avec un élément chauffant (4), et
- on procède au refroidissement du moule souple (1) par mise en contact de sa surface externe avec un élément réfrigérant (7, 8).

2. Procédé selon la revendication 1, caractérisé en ce que l'organe-support (12) est rendu solidaire du moule (1) avant remplissage de celui-ci en matériau fondu et demeure en position pendant toutes les phases ultérieures du procédé.

3. Procédé selon la revendication 1, caractérisé en ce que l'organe-support (12) est rendu solidaire de l'objet moulé (6) uniquement après solidification de celui-ci et ouverture au moins partielle du moule (1).

4. Procédé selon la revendication 3, dans lequel le moule soupe (1) a la forme d'un doigt de gant, caractérisé en ce que le moule souple (1) est engagé dans une ouverture (3) d'une platine de manutention (2), à laquelle il est suspendu.

5. Procédé selon l'une des revendications 1 à 4, caractérisé en ce que, pour chauffer le moule souple (1) on l'engage dans un évidement de profil complémentaire d'un godet (4) ou d'un organe de chauffage.

6. Procédé selon l'une des revendications 1 à 5, caractérisé en ce que pour refroidir le moule souple (1), on l'engage dans un évidement de profil complémentaire d'un godet (7) ou d'un organe de refroidissement.

7. Dispositif pour le moulage d'objets en un matériau à bas point de fusion, ce dispositif comprenant :
- un moule souple (1), en un matériau déformable élastiquement, présentant un orifice de remplissage ;
- un moyen de remplissage du moule souple (1) en matériau à bas point de fusion à l'état fondu ;
- un moyen d'ouverture au moins partielle du moule au voisinage de l'orifice de remplissage par mise en dépression de la partie de ce moule contigue à sa surface externe ;
- et un moyen (12) d'extraction de l'objet moulé (6) ;
ce dispositif étant caractérisé en ce qu'il comprend :
- un moyen de chauffage (4) de ce moule souple (1) apte à venir en contact avec la surface externe de celui-ci ; et
- un moyen de refroidissement du moule souple (1) apte à venir en contact avec la surface externe de celui-ci.

8. Dispositif selon la revendication 7, dans lequel le moule souple (1) a la forme d'un doigt de gant, caractérisé en ce qu'il comprend un moyen de manutention (12) du moule souple (1) dans une ouverture (3) duquel le moule est engagé et suspendu.

9. Dispositif selon l'une des revendications 7 et 8, caractérisé en ce que le moyen de chauffage du moule souple (1) comprend un godet (4) ou un organe de chauffage, dans un évidement duquel vient se loger le moule.

10. Dispositif selon l'une des revendications 7 à 9, caractérisé en ce que le moyen de refroidissement du moule souple (1) comprend un godet (7, 8) ou un organe de refroidissement, dans un évidement duquel vient se loger le moule.

11. Dispositif selon la revendication 10, caractérisé en ce que le godet (7 ; 8) ou l'organe de refroidissement comporte des conduits connectés à une source d'aspiration, qui débouchent à la périphérie du moule souple (1), de manière à pouvoir exercer une dépression sur ce moule.

## Claims

1. A process for moulding objects from a material with a low melting point, comprising the following successive phases:
- introducing by way of the filling orifice of a heated flexible mould (1) a predetermined amount of the material with the low melting point in the molten state;
- after cooling of the product, at least partially opening the flexible mould (1) by applying a depression to at least the part of its external surface which is adjacent to the filling orifice;
- withdrawing the moulded object (6) from the mould (1) by means of a support member (12) through the filling opening;
the process being characterised in that:
- prior to the introduction of the molten material into the flexible mould (1), heating of said mould is effected by bringing its external surface into contact with a heating element (4), and
- cooling of the flexible mould (1) is effected by bringing its external surface into contact with a cooling element (7, 8).

2. A process according to claim 1 characterised in that the support member (12) is fixed with respect to the mould (1) before filling thereof with molten material and remains in position throughout all the subsequent phases of the process.

3. A process according to claim 1 characterised in that the support member (12) is fixed with respect to the moulded object (6) solely after solidification thereof and at least partial opening of the mould (1).

4. A process according to claim 3 wherein the flexible mould (1) is in the form of a glove finger characterised in that the flexible mould (1) is engaged in an opening (3) of a handling plate (2) from which it is suspended.

5. A process according to one of claims 1 to 4 characterised in that, to heat the flexible mould (1), it is engaged into a recess of complementary profile in a cup (4) or a heating member.

6. A process according to one of claims 1 to 5 characterised in that, to cool the flexible mould (1), it is engaged into a recess of complementary shape in a cup (7) or a cooling member.

7. Apparatus for moulding objects from a material with a low melting point, the apparatus comprising:
- a flexible mould (1) of an elastically deformable material and having a filling orifice;
- a means for filling the flexible mould (1) with material having a low melting point in the molten state;
- a means for at least partially opening the mould in the vicinity of the filling orifice by applying depression to the part of said mould, which is contiguous to its external surface; and
- a means (12) for extracting the moulded object (6);
said apparatus being characterised in that it comprises:
- a means (4) for heating said flexible mould (1), which is capable of coming into contact with the external surface thereof; and
- a means for cooling the flexible mould (1), which is capable of coming into contact with the external surface thereof.

8. Apparatus according to claim 7 wherein the flexible mould (1) is in the form of a glove finger characterised in that it comprises a means (12) for handling the flexible mould (1), in an opening (3) in which the mould is engaged and suspended.

9. Apparatus according to one of claims 7 and 8 characterised in that the means for heating the flexible mould (1) comprises a cup (4) or a heating member, in a recess in which the mould is accommodated.

10. Apparatus according to one of claims 7 to 9 characterised in that the means for cooling the flexible mould (1) comprises a cup (7, 8) or a cooling member, in a recess in which the mould is accommodated.

11. Apparatus according to claim 10 characterised in that the cup (7; 8) or the cooling member comprises conduits connected to a suction source, which open to the periphery of the flexible mould (1) so as to be able to apply a depression to said mould.

## Patentansprüche

1. Verfahren zum Formen von Gegenstünden aus einem Material mit niedrigem Schmelzpunkt, umfassend die folgenden aufeinanderfolgenden Phasen:
- durch den Einfüllstutzen einer erwärmten flexiblen Gießform (1) wird eine vorbestimmte Menge des Materials mit niedrigem Schmelzpunkt in geschmolzenem Zustand eingeführt;
- nach der Abkühlung des Produkts wird die flexible Gießform (1) wenigstens teilweise durch Ausüben eines Unterdrucks auf wenigstens den Abschnitt ihrer Oberfläche, der an den Einfüllstutzen angrenzt, geöffnet;
- der geformte Gegenstand (6) wird mittels einer Halteeinrichtung (12) durch die Einfüllöffnung aus der Gießform (1) entnommen;
wobei das Verfahren dadurch gekennzeichnet ist, daß:
- vor dem Einführen des geschmolzenen Materials in die flexible Gießform (1) die Erwarmung dieser Gießform durch Beaufschlagung ihrer Außenfläche mit einem Herzelement (4) vorgenommen wird, und
- die Abkühlung der flexiblen Gießform (1) durch Beaufschlagung ihrer Außenfläche mit einem Kühlelement (7,8) vorgenommen wird.

2. Verfahren nach Anspruch 1, dadurch gekennzeichnet, daß die Halteeinrichtung (12) vor Befüllung der Gießform (1) mit geschmolzenem Material mit der Gießform (1) in Verbindung gebracht wird und während aller weiteren Phasen des Verfahrens in dieser Position bleibt.

3. Verfahren nach Anspruch 1, dadurch gekennzeichnet, daß die Halteeinrichtung (12) mit dem geformten Objekt (6) erst nach dessen Verfestigung und der wenigstens teilweisen Öffnung der Gießform (1) in Verbindung gebracht wird.

4. Verfahren nach Anspruch 3, in dem die flexible Gießform (1) die Form eines Handschuhfingers hat, dadurch gekennzeichnet, daß die flexible Form (1) in eine Öffnung (3) einer Handhabungsplatte (2) eingesetzt ist, in welcher sie aufgehängt ist.

5. Verfahren nach einem der Ansprüche 1 bis 4, dadurch gekennzeichnet, daß die flexible Gießform (1) zum Erwärmen in eine Ausnehmung mit komplementärem Profil eines Bechers (4) oder einer Heizeinrichtung einführt wird.

6. Verfahren nach einem der Ansprüche 1 bis 5, dadurch gekennzeichnet, daß die flexible Gießform (1) zum Abkühlen in eine Ausnehmung mit komplementärem Profil eines Bechers (7) oder einer Kühleinrichtung einfügt wird.

7. Vorrichtung zum Formen von Gegenständen aus einem Material mit niedrigem Schmelzpunkt, umfassend:
- eine flexible Gießform (1) aus einem elastisch verformbaren Material, die einen Einfüllstutzen aufweist;
- ein Mittel zum Befüllen der flexiblen Gießform (1) mit einem Material mit niedrigem Schmelzpunkt in geschmolzenem Zustand;
- ein Mittel zum wenigstens teilweisen Öffnen der Gießform im Bereich des Einfüllstutzens durch Ausüben eines Unterdrucks an dem Abschnitt dieser Gießform, der an ihre Außenfläche angrenzt;
- und ein Mittel (12) zum Herausnehmen des geformten Objekts (6);
wobei diese Vorrichtung gekennzeichnet ist durch:
- ein Mittel (4) zum Erwärmen dieser Gießform (1), das in Kontakt mit dessen Außenfläche bringbar ist; und
- ein Mittel zum Abkühlen der Gießform (1), das in Kontakt mit dessen Außenfläche bringbar ist.

8. Vorrichtung nach Anspruch 7, in der die flexible Gießform (1) die Form eines Handschuhfingers hat, dadurch gekennzeichnet, daß sie ein Mittel (12) zur Handhabung der flexiblen Gießform (1) in einer Öffnung (3) umfaßt, in welcher die Gießform eingesetzt und aufgehängt ist.

9. Vorrichtung nach einem der Ansprüche 7 und 8, dadurch gekennzeichnet, daß das Mittel zum Erwärmen der flexiblen Gießform (1) einen Becher (4) oder eine Heizeinrichtung umfaßt, wobei die Gießform in einer Ausnehmung des Bechers bzw. der Heizeinrichtung aufgenommen ist.

10. Vorrichtung nach einem der Ansprüche 7 bis 9, dadurch gekennzeichnet, daß das Mittel zum Abkühlen der flexiblen Gießform (1) einen Becher (7, 8) oder eine Kühleinrichtung umfaßt, wobei die Gießform in einer Ausnehmung des Bechers bzw. der Kühleinrichtung aufgenommen ist.

11. Vorrichtung nach Anspruch 10, dadurch gekennzeichnet, daß der Becher (7, 8) oder die Kühleinrichtung mit einer Saugquelle verbundene Leitungen umfaßt, die in der Umgebung der Gießform (1) derart münden, daß sie einen Unterdruck auf die Gießform ausüben können.
